# EUROPÄISCHE PATENTSCHRIFT

(11) **EP 2 580 835 B1**
(45) Veröffentlichungstag und Bekanntmachung des Hinweises auf die Patenterteilung: **26.07.2017**
(21) Anmeldenummer: 11724254.5
(22) Anmeldetag: 10.06.2011
(51) Int. Cl.: H02J 3/44, H02M 7/42, H02J 3/26, H02J 3/38

(54) **VERFAHREN ZUM EINSPEISEN ELEKTRISCHER ENERGIE IN EIN DREIPHASIGES WECHSELSPANNUNGSNETZ**
METHOD FOR FEEDING ELECTRICAL POWER INTO A THREE-PHASE AC VOLTAGE SYSTEM
PROCÉDÉ D'ALIMENTATION D'UN RÉSEAU DE TENSION ALTERNATIVE TRIPHASÉE EN ÉNERGIE ÉLECTRIQUE

(30) Priorität: 10.06.2010 DE 102010029951
(43) Veröffentlichungstag der Anmeldung: 17.04.2013
(73) Patentinhaber: Wobben Properties GmbH, 26607 Aurich (DE)
(72) Erfinder: ADLOFF, Stephan, 26629 Großefehn (DE)
(74) Vertreter: Eisenführ Speiser
(86) Internationale Anmeldenummer: PCT/EP2011/059717
(87) Internationale Veröffentlichungsnummer: WO 2011/154532

(56) Entgegenhaltungen:
- EP-A1- 0 471 106
- WO-A2-2008/061698
- JP-A- H0 638 532
- JP-A- H11 346 441
- HONG-SEOK SONG ET AL: "Dual Current Control Scheme for PWM Converter Under Unbalanced Input Voltage Conditions", IEEE TRANSACTIONS ON INDUSTRIAL ELECTRONICS, IEEE SERVICE CENTER, PISCATAWAY, NJ, USA, Bd. 46, Nr. 5, 1. Oktober 1999 (1999-10-01), XP011023580, ISSN: 0278-0046
- ALEPUZ S ET AL: "Control Strategies Based on Symmetrical Components for Grid-Connected Converters Under Voltage Dips", IEEE TRANSACTIONS ON INDUSTRIAL ELECTRONICS, IEEE SERVICE CENTER, PISCATAWAY, NJ, USA, vol. 56, no. 6, 1 June 2009 (2009-06-01), pages 2162-2173, XP011253642, ISSN: 0278-0046
- MAGUEED F A ET AL: "Transient performance of voltage source converter under unbalanced voltage dips", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20 June 2004 (2004-06-20), pages 1163-1168, XP010739827, DOI: 10.1109/PESC.2004.1355587 ISBN: 978-0-7803-8399-9
- Massimo Bongiorno ET AL: "Dynamic Performance of Current Controllers for Grid-connected Voltage Source Converter Under Unbalanced Voltage Conditions", Proc. of IEEE Nordic Workshop on Power and Industrial Electronics (NORpie 2004), 1 January 2004 (2004-01-01), XP055253395,

## Beschreibung

Die vorliegende Erfindung betrifft ein Verfahren zum Einspeisen eines unsymmetrischen, dreiphasigen Stroms in ein dreiphasiges Wechselspannungsnetz. Weiterhin betrifft die vorliegende Erfindung eine entsprechende Vorrichtung zum Einspeisen eines unsymmetrischen Stroms in ein dreiphasiges Wechselspannungsnetz sowie eine mit einer solchen Vorrichtung versehene Windenergieanlage.

Elektrische Energie wird in großem Umfang in einem dreiphasigen Wechselspannungsnetz verteilt, insbesondere von Energieerzeugern, wie Großkraftwerken, Windenergieanlagen oder dergleichen zum Verbraucher verteilt. Insbesondere die Verbraucher stellen sich dabei auf ein Wechselspannungsnetz ein, das bestimmte Eigenschaften aufweist. Hierzu gehört eine bestimmte Frequenz und Phase der einzelnen Spannungen untereinander, die Spannungsamplitude jeder Phase und schließlich auch eine gewisse Symmetrie des Wechselspannungsnetzes. Idealerweise weist jede Phase des dreiphasigen Systems beispielsweise für das europäische Verbundnetz einen Effektivwert der Spannung von 235 V auf, eine Frequenz von 50,0 Hz und eine Phasenlage zu den jeweiligen anderen beiden Phasen von 120° bzw. 240°. Die Einhaltung solcher Eigenschaften ist eine wichtige Forderung und Abweichungen sind nur in geringen Grenzen zulässig. Zu starke Abweichungen können sowohl die Stabilität des jeweiligen dreiphasigen Wechselspannungsnetzes gefährden, als auch Schäden bei empfindlichen Verbrauchern verursachen.

Zum Erreichen, dass die geforderten Eigenschaften eingehalten werden, insbesondere dass das dreiphasige Wechselspannungsnetz symmetrisch ist, speisen Energieerzeuger, insbesondere große Kraftwerke, symmetrisch in dieses Wechselspannungsnetz ein. Größere Verbraucher wie Fabriken mit großen Maschinen müssen sicherstellen, dass das Wechselspannungsnetz nicht oder nur in einem sehr geringen Rahmen unsymmetrisch belastet wird.

Für kleine Verbraucher wird davon ausgegangen, dass diese in der Gesamtheit schon aus statistischen Gründen das Wechselspannungsnetz im Wesentlichen nur symmetrisch belasten.

Dennoch kann es vorkommen, dass eine unsymmetrische Belastung oder gegebenenfalls eine unsymmetrische Einspeisung vorliegt. Ein unsymmetrisches Netz kann - zumindest abschnittsweise - die Folge sein. In diesem Fall ist es wünschenswert oder sogar notwendig - je nach Stärke der Unsymmetrie - die Unsymmetrie in dem Wechselspannungsnetz zu kompensieren. Großkraftwerke können eine solche Kompensierung oftmals nicht vornehmen, weil diese oftmals durch einen unmittelbar mit dem Wechselspannungsnetz gekoppelten Synchrongenerator einspeisen. Auf die einzelnen Phasen des Synchrongenerators kann im Betrieb und bedarfsabhängig praktisch nicht individuell eingegriffen werden.

Bei Einspeisung einer Windenergieanlage mittels eines Vollumrichters wäre das Vorgeben, Erzeugen und Einspeisen eines unsymmetrischen dreiphasigen Wechselstroms grundsätzlich denkbar, sofern der verwendete Vollumrichter eine solche Fähigkeit aufweist. In einem solchen Fall speist jeder Brückenzweig des Vollumrichters unterschiedlich viel Strom in das Wechselspannungsnetz ein.

Solche unterschiedliche Stromeinspeisung kann zu einer ungleichen Belastung und gegebenenfalls zu zu großen Belastungen führen. Wird der Vollumrichter bis zur zulässigen Leistungsgrenze betrieben und speist dabei unsymmetrisch ein, so kann dies ein Überschreiten der Belastungsgrenze für einen einzelnen Brückenzweig bedeuten. Entsprechend ist mit einer erhöhten Alterung der Bauelemente oder sogar mit einer akuten Fehlfunktion zu rechnen. Die WO 2008/061698 beschreibt eine Windenergieanlage mit Gegensystemregelung. Die veröffentlichte japanische Patentanmeldung JP 06038532 (Fuji Electric Co. Ltd.) beschreibt einen dreiphasigen Stromrichter mit der Fähigkeit, ein unsymmetrisches System an seinem Ausgang zu erzeugen, wobei der Stromrichter einen Mitsystemstromrichter zur Erzeugung einer Mitsystemkomponente und einen Gegensystemstromrichter zur Erzeugung einer Gegensystemkomponente umfasst, und wobei beide Systemkomponenten mittels eines Transformators kombiniert werden. Der vorliegenden Erfindung liegt die Aufgabe zugrunde, zumindest eins der oben genannten Probleme zu beheben oder zu verringern. Insbesondere soll eine Lösung zum Kompensieren oder teilweisen Kompensieren einer unsymmetrischen Situation in einem dreiphasigen Wechselspannungsnetz geschaffen werden, wobei wenigstens eines der oben genannten Probleme vermieden oder verringert werden soll. Vorzugsweise soll eine Lösung zum Einspeisen eines unsymmetrischen, dreiphasigen Wechselstroms in ein Wechselspannungsnetz unter Vermeidung wenigstens eines der oben genannten Probleme vorgeschlagen werden. Zumindest soll eine alternative Lösung vorgeschlagen werden.

Erfindungsgemäß wird ein Verfahren zum Einspeisen eines unsymmetrischen, dreiphasigen Stroms in ein dreiphasiges Wechselspannungsnetz gemäß Anspruch 1 vorgeschlagen.

Der Erfindung liegt die Erkenntnis zugrunde, dass ein unsymmetrisches, dreiphasiges Wechselspannungssystem grundsätzlich durch eine Mitsystemkomponente und eine Gegensystemkomponente dargestellt werden kann. Aus der Elektrotechnik ist grundsätzlich die Methode der symmetrischen Komponenten bekannt, um eine vereinfachte Analyse eines unbalancierten Fehlers in einem Drehstromsystem, also einem dreiphasigen Wechselstromsystem, vorzunehmen. Dabei wird ein unsymmetrisches System von so genannten Phasoren in Mitsystemen, Gegensystemen und Nullsystemen aufgeteilt.

Das Mitsystem, das auch als Mitsystemkomponente bezeichnet werden kann, besitzt die gleiche Umlaufrichtung wie das ursprüngliche System. Das Gegensystem, das auch als Gegensystemkomponente bezeichnet werden kann, hat eine gegenläufige Richtung zum ursprünglichen System. Es gleicht im Grunde die Abweichung der Phasoren von der üblichen 120°-Phasenverschiebung aus. Das Mitsystem als solches und auch das Gegensystem als solches sind jeweils in sich symmetrisch.

Das Nullsystem bezeichnet ein System, bei dem alle Phasoren die gleiche Richtung und die gleiche Länge aufweisen. Dieses Nullsystem gleicht eine etwaige Abweichung von Null der Addition des ursprünglichen Systems aus. Vorliegend wurde jedoch erkannt, dass auf ein Nullsystem bzw. eine Nullsystemkomponente oftmals verzichtet werden kann. Jedenfalls gemäß einer Ausführungsform wird vorgeschlagen, auf ein Nullsystem zu verzichten.

Die zugrunde liegende Theorie der symmetrischen Komponenten wurde bisher benutzt, um ein unsymmetrisches dreiphasiges System zu analysieren und zu beschreiben. So kann jeweils das Mitsystem und die Gegensystemkomponente durch Betrag und Phase beschrieben werden. Mit diesen Werten ist eine weiterführende Analyse möglich.

Nun wird vorgeschlagen, sowohl ein Mitsystem als auch ein Gegensystem zu erzeugen und die so erzeugten Mit- und Gegensysteme zu dem gewünschten einzuspeisenden unsymmetrischen System, nämlich insbesondere dem unsymmetrischen dreiphasigen Wechselstrom zu überlagern. Der so aus Überlagerung entstandene unsymmetrische dreiphasige Gesamtstrom kann dann in das dreiphasige Wechselspannungsnetz eingespeist werden.

Es ist nun möglich, mithilfe eines dreiphasigen Wechselrichtermoduls ein symmetrisches Mitsystem zu erzeugen. Für dieses dreiphasige Wechselrichtermodul stellt sich somit lediglich eine Standardaufgabe, nämlich einen symmetrischen dreiphasigen Wechselstrom zu erzeugen. Weil dieses Wechselrichtermodul nur einen symmetrischen dreiphasigen Wechselstrom erzeugen muss, ergeben sich auch keine Probleme durch eine etwaige unsymmetrische Belastung oder Überbelastung eines Brückenzweiges.

Ein weiteres Wechselrichtermodul kann ein Gegensystem erzeugen. Auch für dieses Wechselrichtermodul stellt sich hiermit lediglich eine Standardaufgabe, einen symmetrischen, dreiphasigen Wechselstrom zu erzeugen.

Das Überlagern dieses Mitsystems und des Gegensystems kann einfach dadurch erfolgen, dass die jeweiligen Phasen jeweils an einem gemeinsamen Knoten verschaltet werden. Dies kann vor oder nach einer Ausgangsdrossel erfolgen.

Die beiden Wechselrichtermodule können teilweise gemeinsame Komponenten aufweisen. Insbesondere im Falle jeweils eines einen Gleichspannungszwischenkreis verwendenden Wechselrichtermoduls, kann für beide Wechselrichtermodule ein gemeinsamer Gleichspannungszwischenkreis und entsprechend auch ein gemeinsamer oder mehrere gemeinsame Gleichrichter zum Speisen elektrischer Energie in den Gleichspannungszwischenkreis verwendet werden.

Das Beispiel eines Wechselrichtermoduls für das Mitsystem und eines Wechselrichtermoduls für das Gegensystem ist eine Ausführungsform, die auch zum Erläutern eines Grundgedankens gut geeignet ist.

Gemäß weiterer Ausführungsformen wird vorgeschlagen, mehr als zwei Wechselrichtermodule zu verwenden, nämlich wenigstens für das Mitsystem oder für das Gegensystem ein zweites Wechselrichtermodul zu verwenden. Vorzugsweise werden viele Wechselrichtermodule verwendet. Für den zu erzeugenden unsymmetrischen dreiphasigen Wechselstrom werden das benötigte Mitsystem und das benötigte Gegensystem berechnet. Je nach Amplitude der jeweiligen Systeme werden entsprechend viele Wechselrichtermodule zum Erzeugen des Mitsystems und entsprechend viele Wechselrichtermodule zum Erzeugen des Gegensystems verwendet. So ist es möglich, mehrere gleich dimensionierte Wechselrichtermodule zu verwenden. Die Amplitude des Mitsystems bzw. des Gegensystems wird dann lediglich durch die Anzahl der verwendeten gleich dimensionierten Wechselrichtermodule realisiert. Hierdurch ist im Wesentlichen eine gleichmäßige Aufteilung erreichbar.

Entsprechend ist das jeweilige Mitsystem aus mehreren Teilmitsystemen und/oder das Gegensystem aus mehreren Teilgegensystemen zusammengesetzt. Die Teilmitsysteme bzw. Teilgegensysteme werden jeweils durch ein Wechselrichtermodul erzeugt und dann überlagert. Bei der Überlagerung können zunächst die Teilmitsysteme zum Mitsystem überlagert werden und/oder die Teilgegensysteme zum Gegensystem überlagert werden, um dann gemeinsam zu dem unsymmetrischen, dreiphasigen Wechselstrom überlagert zu werden, oder die Teilmitsysteme und Teilgegensysteme werden alle zusammen zum gesamten einzuspeisenden unsymmetrischen dreiphasigen Wechselstrom überlagert.

Vorzugsweise werden die jeweiligen Phasen und Amplituden der Mitsysteme, gegebenenfalls der Teilmitsysteme, der Gegensysteme und/oder gegebenenfalls der Teilgegensysteme durch eine gemeinsame Zentraleinheit vorgegeben. Durch eine solche Zentraleinheit kann der einzuspeisende unsymmetrische dreiphasige Wechselstrom rechnerisch in die vorzusehenden und zu erzeugenden Mitsysteme und Gegensysteme eingeteilt werden, gegebenenfalls auch in die weitere Unterteilung in Teilmitsysteme bzw. Teilgegensysteme. Die Zentraleinheit - der üblicherweise die Information der zur Verfügung stehenden Wechselrichtermodule vorliegt - kann somit eine Gesamtaufteilung vornehmen und dadurch dafür sorgen, dass der unsymmetrische, dreiphasige Wechselstrom im Grunde durch eine Vielzahl gleicher symmetrischer dreiphasiger Strom-Komponenten zusammengesetzt wird. Vorzugsweise berücksichtigt die Zentraleinheit hierbei die zur Verfügung stehende Gesamtwirkleistung der zur Verfügung stehenden Wechselrichtermodule. Insbesondere beim Einspeisen durch eine Windenergieanlage gewonnener elektrischer Energie bzw. Leistung kann diese in der Amplitude erfasst und entsprechend die Aufteilung des zu erzeugenden Stroms vorgenommen werden.

Es ist mit einer hierfür vorbereiteten Vorrichtung auch ohne weiteres möglich, eine symmetrische Einspeisung - also eine nicht erfindungsgemäße Einspeisung - zu steuern. In diesem Fall bräuchte nur ein Mitsystem und kein Gegensystem erzeugt zu werden. Vorzugsweise weisen alle Teilmitsysteme gleiche Phasen und/oder Amplituden auf und/oder alle Teilgegensysteme weisen ihrerseits gleiche Phasen und Amplituden auf.

Dies ermöglicht eine gleichmäßige Aufteilung, durch die etwaige Belastungen verwendeter Bauteile minimiert werden und wodurch eine Vereinfachung sowohl der Berechnung als auch der Erzeugung erreicht werden kann.

Vorzugsweise wird ein Verfahren vorgeschlagen, das dadurch gekennzeichnet ist, dass das Mitsystem und das Gegensystem jeweils durch wenigstens ein eigenes Wechselrichtermodul erzeugt werden und/oder eine bzw. die Zentralsteuereinheit vorgibt, welches bzw. welche der Wechselrichtermodule ein Mitsystem erzeugt und welches bzw. welche der Wechselrichtermodule ein Gegensystem erzeugt.

Durch die Erzeugung sowohl des Mitsystems als auch des Gegensystems jeweils durch wenigstens ein eigenes Wechselrichtermodul kann jedes Wechselrichtermodul sich auf das Erzeugen eines symmetrischen dreiphasigen Wechselstroms beschränken. Vorzugsweise gibt die Steuereinheit vor, welches bzw. welche der Wechselrichtermodule ein Mitsystem und welches bzw. welche ein Gegensystem erzeugt bzw. erzeugen. Dies bedeutet auch, dass die verwendeten Wechselrichtermodule nicht auf die Erzeugung eines Mitsystems oder die Erzeugung eines Gegensystems festgelegt sind. Vielmehr kann bedarfsabhängig jeweils eine unterschiedliche Anzahl von Wechselrichtermodulen für die Erzeugung eines Mitsystems eingesetzt werden und ebenso eine unterschiedliche Anzahl von Wechselrichtermodulen zum Erzeugen eines Gegensystems eingesetzt werden.

Vorzugsweise wird bei sich änderndem Bedarf ein Wechselrichtermodul oder mehrere Wechselrichtermodule in ihrer Verwendung geändert. Demnach kann ein exemplarisches Wechselrichtermodul zunächst ein Mitsystem erzeugen und später wechseln zum Erzeugen eines Gegensystems oder umgekehrt.

Erfindungsgemäß wird zudem eine Vorrichtung zum Einspeisen eines unsymmetrischen dreiphasigen Stroms in ein dreiphasiges Wechselspannungsnetz gemäß Anspruch 6 vorgeschlagen. Eine solche Vorrichtung umfasst zumindest ein erstes Wechselrichtermodul zum Erzeugen eines Mitsystems des einzuspeisenden Stroms und ein zweites Wechselrichtermodul zum Erzeugen eines Gegensystems des einzuspeisenden Stroms. Die beiden Wechselrichtermodule sind so gekoppelt, dass das Mitsystem mit dem Gegensystem zu einem einzuspeisenden Strom, nämlich einem einzuspeisenden Gesamtstrom überlagert werden. Hierzu sind die Wechselrichtermodule insbesondere an ihrem Stromausgang entsprechend verschaltet. Dies kann vor oder hinter einer Drossel vorgesehen sein.

Vorzugsweise kann das erste Wechselrichtermodul durch weitere Wechselrichtermodule beim Erzeugen des Mitsystems unterstützt werden und das zweite Wechselrichtermodul kann beim Erzeugen des Gegensystems durch weitere Wechselrichtermodule unterstützt werden.

Vorzugsweise ist das wenigstens eine erste Wechselrichtermodul und das wenigstens eine zweite Wechselrichtermodul über einen gemeinsamen Gleichspannungszwischenkreis gekoppelt, um das jeweilige Mitsystem bzw. Gegensystem aus der Gleichspannung des gemeinsamen Gleichspannungszwischenkreises zu erzeugen. Insoweit erzeugen unterschiedliche Wechselrichtermodule unterschiedliche Komponenten des unsymmetrischen dreiphasigen einzuspeisenden Stroms, nutzen aber eine gemeinsame Quelle. Insbesondere kann ein solcher gemeinsamer Gleichspannungszwischenkreis von einer gemeinsamen Quelle wie beispielsweise einer Photovoltaikanlage oder einer Windenergieanlage bzw. dem durch einen Generator einer Windenergieanlage erzeugten Strom gespeist werden. Dies hat zudem den Vorteil, dass Änderungen hinsichtlich der Erzeugung des Mitsystems und Gegensystems für den Gleichspannungszwischenkreis und damit die speisende vorgeschaltete Quelle im Grunde ohne Auswirkung ist. So kann auch wenigstens eines der Wechselrichtermodule neu eingeteilt werden, nämlich ein Teilmitsystem statt eines Teilgegensystems zu erzeugen oder umgekehrt, ohne dass dies eine Auswirkung auf die den Gleichspannungszwischenkreis speisende Quelle haben muss.

Als eine bevorzugte Ausführungsform ergibt sich somit, dass wenigstens eines des wenigstens ersten Wechselrichtermoduls und/oder des wenigstens zweiten Wechselrichtermoduls dazu vorbereitet ist, wahlweise ein Mitsystem oder ein Teil davon oder ein Gegensystem oder ein Teil davon zu erzeugen.

Vorzugsweise wird eine Vorrichtung vorgesehen, die dadurch gekennzeichnet ist, dass eine Zentralsteuereinheit vorgesehen ist zum Vorgeben von Sollwerten für Betrag und Phase für das Erzeugen des jeweiligen Gegensystems bzw. Mitsystems und/oder zum Bestimmen, welches der ersten und zweiten Wechselrichtermodule zum Erzeugen eines Mitsystems und welches zum Erzeugen eines Gegensystems verwendet wird.

Somit kann auf einfache und effiziente Weise eine gemeinsam gesteuerte Vorrichtung vorgesehen werden, die gleichwohl unterschiedliche Stromkomponenten bereitstellt, die zum Einspeisen überlagert werden.

Vorzugsweise ist zur Kommunikation der Wechselrichtermodule untereinander und gegebenenfalls zur Kommunikation mit der Zentralsteuereinheit ein Datenbussystem vorgesehen. Hierdurch können auf einfache Weise Daten zwischen den einzelnen Wechselrichtermodulen und der Zentralsteuereinheit ausgetauscht werden, um die einzelnen Komponenten zu steuern und ein aufeinander abgestimmtes Gesamtverhalten der Vorrichtung zu erreichen. Ein solches Datenbussystem ist auch dann vorteilhaft, wenn eine Vielzahl von Wechselrichtermodulen vorgesehen ist, die gegebenenfalls nicht in ein und demselben Gehäuse untergebracht sind. So können beispielsweise eine Vielzahl von Wechselrichtermodulen im Turmfuß einer Windenergieanlage vorgesehen sein, die einen gemeinsamen Gleichspannungszwischenkreis aufweisen, insbesondere einen Gleichspannungszwischenkreis, der als so genannte Sammelschiene ausgebildet ist. Sofern Abstände zwischen den einzelnen Wechselrichtermodulen vorgesehen sind, kann dies zum Kühlen derselben vorteilhaft sein. Auch im Falle des Tausches oder der Wartung eines Wechselrichtermoduls kann dieses auf einfache Weise von dem Gleichspannungszwischenkreis getrennt und auch von dem Datenbus getrennt werden und ein Austauschmodul oder das gewartete Modul an der Stelle eingesetzt werden. Dies ermöglicht einen modularen Aufbau und gleichwohl eine Zentralsteuerung der Gesamteinspeisevorrichtung.

Eine solche modulare Bauweise ermöglicht es auch, gleiche Wechselrichtermodule für Einspeisevorrichtungen vorzusehen, die unterschiedliche Gesamtleistungen aufweisen. Diese unterschiedlichen Gesamtleistungen - z. B. für den Einsatz in unterschiedlich großen Windenergieanlagen - können auf einfache Weise durch das Vorsehen der entsprechenden Anzahl Wechselrichtermodule erreicht werden.

Vorzugsweise wird eine Windenergieanlage mit einer erfindungsgemäßen Vorrichtung zum Einspeisen eines unsymmetrischen dreiphasigen Stroms vorgeschlagen. Eine solche Windenergieanlage weist insbesondere einen Rotor mit einer Rotornabe und einem oder mehreren Rotorblättern auf, um Wind in eine Rotationsbewegung des Rotors umzusetzen. Weiterhin ist ein elektrischer Generator, insbesondere ein Synchrongenerator vorgesehen mit einem elektromagnetischen Rotor, der durch den gerade beschriebenen aerodynamischen Rotor angetrieben wird, um elektrischen Strom zu erzeugen. Dieser elektrische Strom wird verwendet, um nach entsprechender Wandlung mittels der Vorrichtung zum Einspeisen in das Wechselspannungsnetz eingespeist zu werden. Hierfür können beispielsweise der von dem Generator erzeugte Strom gleichgerichtet und in einen Gleichspannungszwischenkreis eingespeist werden, an den Wechselrichtermodule angeschlossen sind, um die Einspeisung vorzunehmen. Vorzugsweise ist die Vorrichtung in oder an einem Turm der Windenergieanlage angeordnet, auf den der beschriebene Rotor und Generator angeordnet sind und getragen werden.

Der besondere Vorteil der Verwendung einer Windenergieanlage mit einer erfindungsgemäßen Vorrichtung zum Einspeisen eines unsymmetrischen dreiphasigen Stromes in ein dreiphasiges Wechselspannungsnetz liegt darin, dass insbesondere an dezentralen Abschnitten eines Wechselspannungsnetzes Unsymmetrien auftreten können. Durch die Verwendung einer Windenergieanlage ist es möglich, diese ebenso dezentral aufzustellen und dadurch einer Unsymmetrie in diesem dezentralen Netzabschnitt gezielt entgegenzuwirken.

Im Übrigen kommt hierbei auch in Betracht, elektrische Energie aus einem eine Unsymmetrie aufweisenden Wechselspannungsnetzes zu entnehmen und in einen unsymmetrischen, dreiphasigen Strom umzuwandeln, der besagter Unsymmetrie entgegenwirkt. Somit kann eine Windenergieanlage selbst im Falle von Windstille bei Bedarf zur Symmetrierung einer Unsymmetrie in einem Wechselspannungsnetz beitragen.

Die vorliegende Erfindung ist insbesondere auch vorgesehen, Anforderungen, die von Richtlinien, wie der technischen Richtlinie "BDEW, Technische Richtlinie Erzeugungsanlagen am Mittelspannungsnetz, Richtlinie für Anschluss und Parallelbetrieb von Erzeugungsanlagen am Mittelspannungsnetz, Juni 2008" gefordert werden, umzusetzen. Ebenso ist die Erfindung dazu vorgesehen, konform mit Einspeiserichtlinien zu arbeiten und insbesondere neuere Forderungen an die Netzqualität solcher Richtlinien umzusetzen. Dies betrifft insbesondere auch die Verordnung zu Systemdienstleistungen durch Windenergieanlagen, 10. Juli 2009.

Gemäß einer Ausführungsform bildet die erfindungsgemäße Vorrichtung zum Einspeisen eines unsymmetrischen dreiphasigen Stroms eine Erzeugungseinheit bzw. einen Teil einer Erzeugungseinheit im Sinne der BDEW Mittelspannungsrichtlinie.

Nachfolgend wird die vorliegende Erfindung exemplarisch anhand von Ausführungsbeispielen unter Bezugnahme auf die begleitenden Figuren näher erläutert.
- Figur 1: zeigt schematisch eine Struktur einer Erzeugungseinheit gemäß der vorliegenden Erfindung.
- Figuren 2a bis 2c: erläutern die Zusammensetzung eines unsymmetrischen dreiphasigen Wechselstroms (Figur 2c) aus Mitsystem (Figur 2a) und Gegensystem (Figur 2b).
- Figur 3: zeigt schematisch einen Vollumrichter mit mehreren Umrichtermodulen gemäß der vorliegenden Erfindung.

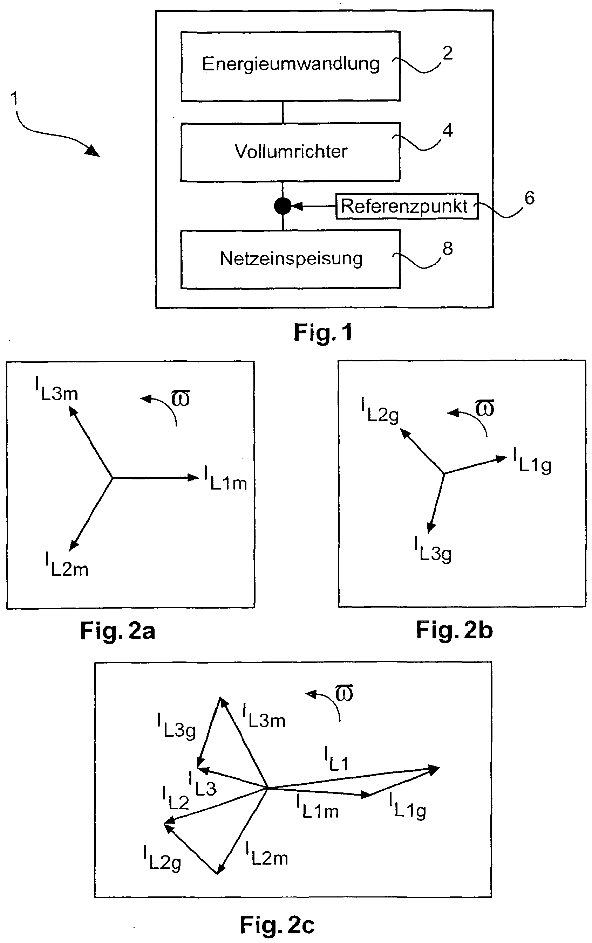

Die Erzeugungseinheit 1 gemäß der schematischen Darstellung der Figur 1 umfasst einen Energieumwandlungsabschnitt 2, der elektrische Energie aus einer anderen Energieform gewinnt. So kann beispielsweise mittels einer Windenergieanlage Energie aus dem Wind über einen aerodynamischen Rotor und einen elektrischen Generator in elektrischen Strom gewandelt werden. Zwischen dem aerodynamischen Rotor und dem elektrischen Generator kann ein Getriebe vorgesehen sein, worauf es vorliegend nicht ankommt. Als weiteres Beispiel zur Gewinnung elektrischer Energie aus einer anderen Energieform sei eine Solarzelle genannt, die aus Sonneneinstrahlung elektrische Energie gewinnen kann.

Um diese in dem Energieumwandlungsabschnitt 2 gewonnene elektrische Energie zum Einspeisen in ein elektrisches Wechselspannungsnetz vorzubereiten, ist ein Vollumrichter 4 vorgesehen. Im Grunde wird die gesamte durch den Energieumwandlungsabschnitt 2 gewonnene elektrische Energie über diesen Vollumrichter 4 geführt, um in das Wechselspannungsnetz eingespeist zu werden. Der Vollumrichter erzeugt hierbei erfindungsgemäß wenigstens ein Mitsystem und wenigstens ein Gegensystem, die am Referenzpunkt 6 überlagert werden, um dann als gemeinsamer, unsymmetrischer Gesamtstrom in das Netz eingespeist zu werden. Hierfür ist ein Netzeinspeisungsblock 8 zur Veranschaulichung dargestellt.

Bei Erzeugungseinheiten, wie der Erzeugungseinheit 1 mit Vollumrichter 4 wird das Einspeiseverhalten durch den Umrichter bzw. Vollumrichter charakterisiert. Die Art der Einspeisung, beispielsweise hinsichtlich Wirk-/Blindleistung und Phasenwinkel wird durch die Ansteuerung in dem Umrichter enthaltener Leistungshalbleiter festgelegt. Eine unsymmetrische Leistungseinspeisung könnte durch eine unsymmetrische Stromeinspeisung realisiert werden. In einem solchen Fall besteht der eingespeiste Strom erfindungsgemäß aus einem Mit- und einem Gegensystem, was zu einem unsymmetrischen Gesamtstrom der Erzeugungseinheit führt.

Die Erzeugung des einzuspeisenden unsymmetrischen dreiphasigen Wechselstroms wird anhand von Zeigerdiagrammen in den Figuren 2a bis 2c erläutert. Dieser Erläuterung liegt der Einfachheit halber eine Zusammensetzung eines unsymmetrischen dreiphasigen Gesamtstroms aus einem Mitsystem und einem Gegensystem zugrunde. Das Mitsystem ist in Figur 2a dargestellt. Die zeigt Amplitude und Phase der drei Ströme I_{L1m}, I_{L2m} und I_{L3m}. Die Kreisfrequenz des dargestellten Zeigersystems ist mit *ω* angegeben. Die Kreisfrequenz *ω* führt zu einer Phasenfolge I_{L1M}, I_{L2m} und I_{L3m}. Die Phase zwischen den drei Strömen IL₁ₘ, I_{L2m} und I_{L3m} betragen jeweils 120° bzw. 240°. Die Amplituden der drei Ströme I_{L1m}, I_{L2m} und I_{L3m} sind gleich. Insoweit liegt ein symmetrischer, dreiphasiger Strom vor.

Das Gegensystem gemäß Figur 2b zeigt drei Zeiger für die drei Ströme I_{L1g}, I_{L3g} und I_{L2g}, die ebenfalls einen Phasenwinkel von 120° bzw. 240° aufweisen, und die jeweils dieselbe Amplitude haben. Die Kreisfrequenz ist auch für das Gegensystem mit *ω* angezeigt. Das Gegensystem ist somit auch symmetrisch.

Somit werden zumindest zwei symmetrische, dreiphasige Ströme erzeugt.

Das Gesamtsystem ergibt sich dann aus der Überlagerung des Mitsystems und des Gegensystems. Das bedeutet, dass jeweils die Ströme einer Phase beider Systeme addiert werden. Das so überlagerte System ist in der Figur 2c dargestellt. Die Zeiger I_{L1}, I_{L2} und I_{L3} stellen die drei Ströme des resultierenden unsymmetrischen, überlagerten, dreiphasigen Gesamtstroms dar. Entsprechend ergibt sich der Zeiger I_{L1} durch die vektorielle Addition der Zeiger I_{L1m} des Mitsystems gemäß Figur 2a und I_{L1g} gemäß dem Gegensystem der Figur 2b. Entsprechend addieren sich I_{L2m} und I_{L2g} zu I_{L2} und es addieren sich I_{L3m} und I_{L3g} zu I_{L3}. Dies ist in Figur 2c dargestellt. Der Umlauf dieses unsymmetrischen Gesamtsystems ist auch durch *ω* gegeben. Der Umlauf *ω* ist für das Mitsystem nach Figur 2a, das Gegensystem nach Figur 2b und den Gesamtstrom nach Figur 2c gleich.

Aus der Figur 2c ist somit zu erkennen, dass sich ein dreiphasiger unsymmetrischer Gesamtstrom aus Überlagerung zweier dreiphasiger symmetrischer Ströme ergibt.

Um einen in Figur 2c dargestellten Gesamtstrom I_{L1}, I_{L2} und I_{L3} zu erzeugen, müsste ein nicht modular aufgebauter Vollumrichter, der beispielsweise eine Wechselrichterbrücke pro Phase zur Verfügung hat, bei der Einspeisung eines unsymmetrischen Stroms eine unsymmetrische Ansteuerung seiner Ventile, insbesondere Halbleiterschalter, zulassen. Aber auch bei einem modular aufgebauten Vollumrichter, der mehrere Wechselrichtermodule aufweist, die jedes für sich einen dreiphasigen Strom erzeugen, kann ein unsymmetrischer Gesamtstrom erzeugt werden, indem jedes Wechselrichtermodul einen unsymmetrischen Teilstrom erzeugt und alle erzeugten unsymmetrischen Teilströme zu dem unsymmetrischen Gesamtstrom überlagert werden. Insbesondere könnte jedes Wechselrichtermodul einen unsymmetrischen Teilstrom erzeugen, der in Phase und Phasenlage dem unsymmetrischen Gesamtstrom entspricht, aber kleinere Amplituden aufweist.

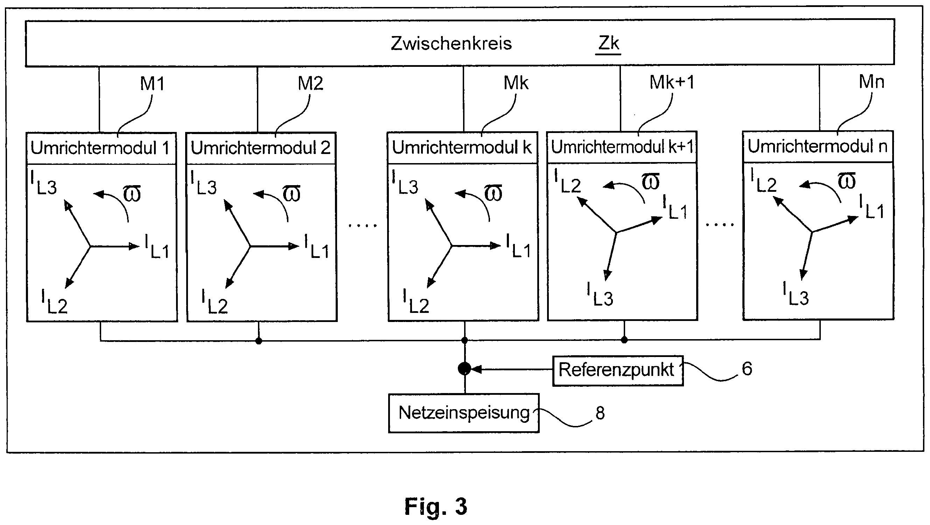

Bei einem modular aufgebauten Vollumrichter ist eine unsymmetrische Ansteuerung der Ventile bzw. Halbleiterschalter jedoch nicht notwendig. Jedes Umrichtermodul kann stattdessen einen symmetrischen Strom einspeisen, indem die Gesamtstromeinspeisung nicht gleichmäßig auf die Umrichtermodule aufgeteilt wird. Vielmehr sieht die Erfindung vor, eine Einspeisecharakteristik festzulegen, bei der je nach geforderter Unsymmetrie eine bestimmte Anzahl von Umrichtermodulen ein reines Mitsystem, also einen reinen Mitsystemstrom, also einen dreiphasigen Strom gemäß Figur 2a, einspeist, während die übrigen Module ein reines Gegensystem, also einen reinen Gegensystemstrom, also einen dreiphasigen Strom gemäß Figur 2b einspeisen. Eine solche Aufteilung ist in Figur 3 veranschaulicht. Die gezeigten Umrichtermodule bilden Wechselrichtermodule, wie oben beschrieben, bzw. die Umrichtermodule können auch als Wechselrichtermodule bezeichnet werden.

Figur 3 zeigt einen gemeinsamen Gleichspannungszwischenkreis Zk, an dem eine Vielzahl Umrichtermodule M1, M2 bis Mk und Mk+1 bis Mn angeschlossen sind. Diese Umrichtermodule M1 bis Mn bilden einen Umrichter im Sinne des Vollumrichters 4 gemäß Figur 1. Die Umrichtermodule M1 bis Mk erzeugen jeweils ein Mitsystem, also einen Mitsystemstrom. Die übrigen Umrichtermodule Mk+1 bis Mn erzeugen jeweils ein Gegensystem, also einen Gegensystemstrom gemäß Figur 2b. Die so erzeugten Ströme werden am Referenzpunkt 6 oder vorher überlagert und dann wie durch den Block 8 veranschaulicht ins Wechselspannungsnetz eingespeist. Entsprechend führt die Überlagerung am Referenzpunkt der Erzeugereinheit zu einem unsymmetrischen Gesamtstrom.

Je nach Steuerverfahren und damit je nach gewählter Ausführungsform werden die Umrichtermodule in Gruppen, nämlich eine so genannte Gruppe Mitsystem und eine so genannte Gruppe Gegensystem angesteuert, wobei Amplitude und Phasenlage der jeweiligen Modulströme innerhalb einer Gruppe identisch sind, oder es erfolgt eine Ansteuerung jedes einzelnen Moduls. In diesem zweiten Fall können sich Amplitude und Phasenlage von Umrichtermodul zu Umrichtermodul unterscheiden.

Insbesondere wenn die Umrichtermodule in Gruppen angesteuert werden und eine Zentralsteuereinheit vorgesehen ist, die die Gruppenansteuerung und gegebenenfalls auch die Gruppeneinteilung vornimmt, ist eine im Wesentlichen gleichmäßige Aufteilung der insgesamt einzuspeisenden Leistung auf alle Module M1 bis Mn möglich, soweit dies durch die vorhandene Anzahl der Umrichtermodule M1 bis Mn möglich ist.

Die Vorgabe des einzuspeisenden unsymmetrischen dreiphasigen Stroms kann durch externe Eingaben beispielsweise durch den Netzbetreiber des Wechselspannungsnetzes erfolgen, oder die Erzeugungseinheit und/oder zu verwendende zentrale Steuereinheit erfasst eine Unsymmetrie in dem Wechselspannungsnetz und berechnet selbständig einen einzuspeisenden unsymmetrischen Strom, um der im Netz erfassten Unsymmetrie entgegenzuwirken.

Vorteilhafterweise wird eine Erzeugungseinheit mit einer Windenergieanlage verwendet. Vorteilhaft ist es, eine Windenergieanlage zu verwenden, die drehzahlvariabel ist und einen Synchrongenerator verwendet. Der Synchrongenerator erzeugt im Betrieb einen elektrischen Strom, der gleichgerichtet und zum Speisen eines Gleichspannungszwischenkreises, wie dem Gleichspannungszwischenkreis Zk der Figur 3 verwendet wird. Hierdurch kann eine Drehzahlregelung der Windenergieanlage im Wesentlichen von der Einspeisung in das elektrische Wechselspannungsnetz entkoppelt werden. An den Zwischenkreis sind eine Vielzahl Wechselrichtermodule angeschlossen, die auf die Energie in dem Zwischenkreis zurückgreifen können und wie beschrieben Mitsystemströme und Gegensystemströme zum Überlagern zu dem unsymmetrischen Gesamtstrom erzeugen können.

Erzeugen mehrere Umrichtermodule, wie beispielsweise die Umrichtermodule M1 bis Mk einen Mitsystemstrom, so kann der jeweils durch ein Modul erzeugte Strom als Teilmitsystem oder Teilmitsystemstrom bezeichnet werden. Entsprechend kann, wenn mehrere Umrichtermodule, wie die Umrichtermodule Mk1 bis Mn einen Gegensystemstrom erzeugen, der durch jedes Umrichtermodul erzeugte Gegensystemstrom als Teilgegensystem oder Teilgegensystemstrom bezeichnet werden.

Die vorliegende Erfindung kann somit im Bereich der Umrichtersteuerung angewendet werden. Vorzugsweise wird ein modular aufgebauter Umrichter verwendet, bei dem die Umrichtermodule einzeln oder in Gruppen angesteuert werden können. Die Erfindung findet auch Anwendung bei der Erfüllung von Netzanschlussrichtlinien, insbesondere im Rahmen der Einspeisung elektrischer Energie ins öffentliche Netz, nämlich ins öffentliche Wechselspannungsnetz bzw. Wechselspannungsnetzwerk.

Der Zweck ist, eine unsymmetrische Einspeisung einer Erzeugungseinheit (EZE) zu realisieren. Eine solche EZE umfasst unter anderem auch einen modular aufgebauten Vollumrichter, über den die Einspeisung ins Netz erfolgt. Verwendung findet die vorliegende Erfindung dabei, bei unsymmetrischen Netzspannungen mit einer unsymmetrischen Stromleistung das Netz zu stabilisieren.

Ein Verfahren, bei dem jedes Umrichtermodul unsymmetrisch einspeist, führt zu einer unsymmetrischen Belastung der Betriebsmittel. Gerade für auf symmetrische Einspeisung optimierte Umrichter ist eine unsymmetrische Einspeisung ungünstig, möglicherweise sogar unmöglich oder unzulässig, wenn nicht vorher relevante Komponenten neu dimensioniert werden. Mit anderen Worten müsste ein ganz neuer Wechselrichter konzipiert werden. Bei der vorgeschlagenen Lösung speist jedes Umrichtermodul für sich symmetrischen Strom ein. Für die Komponenten ergibt sich somit-jedenfalls hinsichtlich Belastung - kein Unterschied zum Normalbetrieb, der vorliegt, wenn insgesamt symmetrisch eingespeist wird.

## Patentansprüche

1. Verfahren zum Einspeisen eines unsymmetrischen, dreiphasigen Stroms in ein dreiphasiges Wechselspannungsnetz mittels einer Windenergieanlage, umfassend die Schritte:
- Erzeugen einer Mitsystemkomponente des einzuspeisenden Stroms,
- Erzeugen einer Gegensystemkomponente des einzuspeisenden Stroms,
- Überlagern der Mitsystemkomponente und der Gegensystemkomponente zu dem einzuspeisenden Strom und Einspeisen des so zusammengesetzten Stroms in das dreiphasige Wechselspannungsnetz, **dadurch gekennzeichnet, dass**
die Mitsystemkomponente und die Gegensystemkomponente aus einer Gleichspannung eines gemeinsamen Gleichspannungszwischenkreise erzeugt werden, wobei der gemeinsame Gleichspannungszwischenkreis von einem durch eine Windenergieanlage erzeugten Strom gespeist wird, wobei
die Mitsystemkomponente und die Gegensystemkomponente jeweils durch wenigstens ein eigenes Wechselrichtermodul erzeugt werden und eine Zentralsteuereinheit vorgibt, welches bzw. welche der Wechselrichtermodule eine Mitsystemkomponente erzeugt und welches bzw. welche der Wechselrichtermodule eine Gegensystemkomponente erzeugt.

2. Verfahren nach Anspruch 1, **dadurch gekennzeichnet, dass** die Mitsystemkomponente aus mehreren Teilmitsystemkomponenten zusammengesetzt ist, und/oder die Gegensystemkomponente aus mehreren Teilgegensystemkomponenten zusammengesetzt ist.

3. Verfahren nach einem der vorstehenden Ansprüche, **dadurch gekennzeichnet, dass** die jeweiligen Phasen und Amplituden der Mitsystemkomponente, ggf. der Teilmitsystemkomponente, der Gegensystemkomponente und/oder ggf. der Teilgegensystemkomponente durch eine gemeinsame Zentraleinheit vorgegeben werden.

4. Verfahren nach Anspruch 2 oder 3, **dadurch gekennzeichnet, dass** jedes der Teilmitsystemkomponenten gleiche Phasen und/oder gleiche Amplituden aufweisen und/oder, dass jedes der Teilgegensystemkomponenten gleiche Phasen und/oder gleiche Amplituden aufweisen.

5. Vorrichtung zum Einspeisen eines unsymmetrischen, dreiphasigen Stroms in ein dreiphasiges Wechselspannungsnetz mittels einer Windenergieanlage, umfassend:
- wenigstens ein erstes Wechselrichtermodul zum Erzeugen einer Mitsystemkomponente des einzuspeisenden Stroms,
- wenigstens ein zweites Wechselrichtermodul zum Erzeugen einer Gegensystemkomponente des einzuspeisenden Stroms,
und das wenigstens eine erste Wechselrichtermodul und das wenigstens eine zweite Wechselrichtermodul sind so gekoppelt, dass die Mitsystemkomponente mit der Gegensystemkomponente zu dem einzuspeisenden Strom überlagert werden, **dadurch gekennzeichnet, dass**
das wenigstens eine erste Wechselrichtermodul und das wenigstens eine zweite Wechselrichtermodul über einen gemeinsamen Gleichspannungszwischenkreis gekoppelt sind, um die jeweilige Mitsystemkomponente bzw. Gegensystemkomponente aus der Gleichspannung des gemeinsamen Gleichspannungszwischenkreises zu erzeugen, wobei der gemeinsame Gleichspannungszwischenkreis von einem durch die Windenergieanlage erzeugten Strom gespeist wird, wobei
wenigstens eines des wenigstens einen ersten Wechselrichtermoduls und/oder des wenigstens einen zweiten Wechselrichtermoduls dazu vorbereitet ist, wahlweise eine Mitsystemkomponente oder ein Teil davon oder eine Gegensystemkomponente oder ein Teil davon zu erzeugen, und wobei
eine Zentralsteuereinheit vorgesehen ist zum Bestimmen, welches der ersten und zweiten Wechselrichtermodule zum Erzeugen einer Mitsystemkomponente und welches zum Erzeugen einer Gegensystemkomponente verwendet wird.

6. Vorrichtung nach Anspruch 5, **dadurch gekennzeichnet, dass** die Zentralsteuereinheit vorgesehen ist zum Vorgeben von Sollwerten für Betrag und Phase für das Erzeugen der jeweiligen Gegensystemkomponente bzw. Mitsystemkomponente.

7. Vorrichtung nach Anspruch 5 oder 6, **dadurch gekennzeichnet, dass** zur Kommunikation der Wechselrichtermodule untereinander und ggf. zur Kommunikation mit der Zentralsteuereinheit ein Datenbussystem vorgesehen ist.

8. Vorrichtung nach einem der Ansprüche 5 bis 7, **dadurch gekennzeichnet, dass** ein Verfahren nach einem der Ansprüche 1 bis 4 verwendet wird.

9. Windenergieanlage mit einer Vorrichtung nach einem der Ansprüche 5 bis 8.

## Claims

1. Method for feeding an unbalanced, three-phase current into a three-phase AC voltage system by means of a wind power installation, comprising the steps of:
- producing a positive phase-sequence system component for the current to be fed in,
- producing a negative phase-sequence system component for the current to be fed in,
- superimposing the positive phase-sequence system component and the negative phase-sequence system component to form the current to be fed in and feeding the current composed in this manner into the three-phase AC voltage system, **characterized in that**
the positive phase-sequence system component and the negative phase-sequence system component are produced from a DC voltage of a common DC voltage intermediate circuit, the common DC voltage intermediate circuit being fed by a current produced by a wind power installation, wherein
the positive phase-sequence system component and the negative phase-sequence system component are each produced by at least one separate inverter module, and a central control unit predefines which inverter module or which of the inverter modules produce(s) a positive phase-sequence system component and which inverter module or which of the inverter modules produce(s) a negative phase-sequence system component.

2. Method according to Claim 1, **characterized in that** the positive phase-sequence system component is composed of a plurality of positive phase-sequence subsystem components, and/or the negative phase-sequence system component is composed of a plurality of negative phase-sequence subsystem components.

3. Method according to either of the preceding claims, **characterized in that** the respective phases and amplitudes of the positive phase-sequence system component, if appropriate of the positive phase-sequence subsystem component, of the negative phase-sequence system component and/or, if appropriate, of the negative phase-sequence subsystem component are predefined by a common central unit.

4. Method according to Claim 2 or 3, **characterized in that** each of the positive phase-sequence subsystem components has the same phases and/or the same amplitudes, and/or **in that** each of the negative phase-sequence subsystem components has the same phases and/or the same amplitudes.

5. Apparatus for feeding an unbalanced, three-phase current into a three-phase AC voltage system by means of a wind power installation, comprising:
- at least one first inverter module for producing a positive phase-sequence system component for the current to be fed in,
- at least one second inverter module for producing a negative phase-sequence system component for the current to be fed in,
and the at least one first inverter module and the at least one second inverter module are coupled in such a manner that the positive phase-sequence system component is superimposed with the negative phase-sequence system component to form the current to be fed in, **characterized in that**
the at least one first inverter module and the at least one second inverter module are coupled via a common DC voltage intermediate circuit in order to produce the respective positive phase-sequence system component or negative phase-sequence system component from the DC voltage of the common DC voltage intermediate circuit, the common DC voltage intermediate circuit being fed by a current produced by the wind power installation, wherein
at least one of the at least one first inverter module and/or of the at least one second inverter module is prepared to produce either a positive phase-sequence system component or a part of the latter or a negative phase-sequence system component or a part of the latter, and wherein
a central control unit is provided for the purpose of determining which of the first and second inverter modules is used to produce a positive phase-sequence system component and which is used to produce a negative phase-sequence system component.

6. Apparatus according to Claim 5, **characterized in that** the central control unit is provided for the purpose of predefining desired values for magnitude and phase for producing the respective negative phase-sequence system component or positive phase-sequence system component.

7. Apparatus according to Claim 5 or 6, **characterized in that** a data bus system is provided for communication between the inverter modules and, if appropriate, for communication with the central control unit.

8. Apparatus according to one of Claims 5 to 7, **characterized in that** a method according to one of Claims 1 to 4 is used.

9. Wind power installation having an apparatus according to one of Claims 5 to 8.

## Revendications

1. Procédé d'alimentation d'un courant triphasé asymétrique dans un réseau de tension alternative triphasée au moyen d'une éolienne, comprenant les étapes suivantes :
- la génération d'une composante système directe du courant à alimenter,
- la génération d'une composante système inverse du courant à alimenter,
- la superposition de la composante système directe et de la composante système inverse au courant à alimenter et l'alimentation du courant ainsi composé dans le réseau de tension alternative triphasée, **caractérisé en ce que**
la composante système directe et la composante système inverse sont générées à partir d'une tension continue d'un circuit intermédiaire de tension continue commun, dans lequel le circuit intermédiaire de tension continue commun est alimenté par un courant généré par une éolienne, dans lequel
la composante système directe et la composante système inverse sont générées chacune par au moins un propre module onduleur et une unité de commande centrale spécifie lequel ou lesquels des modules onduleurs génère(nt) une composante système directe et lequel ou lesquels des modules onduleurs génère(nt une composante système inverse.

2. Procédé selon la revendication 1, **caractérisé en ce que** la composante système directe est composée à partir de plusieurs sous-composantes système directes et/ou la composante système inverse est composée à partir de plusieurs sous-composantes système inverses.

3. Procédé selon l'une quelconque des revendications précédentes, **caractérisé en ce que** les phases et amplitudes respectives de la composante système directe, le cas échéant de la sous-composante système directe, de la composante système inverse et/ou le cas échéant de la sous-composante système inverse sont spécifiées par une unité centrale commune.

4. Procédé selon la revendication 2 ou 3, **caractérisé en ce que** chacune des sous-composantes système directes présente les mêmes phases et/ou les mêmes amplitudes et/ou **en ce que** chacune des sous-composantes système inverses présente les mêmes phases et/ou les mêmes amplitudes.

5. Dispositif d'alimentation d'un courant triphasé asymétrique dans un réseau de tension alternative triphasé au moyen d'une éolienne, comprenant :
- au moins un premier module onduleur pour la génération d'une composante système directe du courant à alimenter,
- au moins un second module onduleur pour la génération d'une composante système inverse du courant à alimenter,
et l'au moins un premier module onduleur et l'au moins un second module onduleur sont couplés de sorte que la composante système directe soit superposée à la composante système inverse dans le courant à alimenter, **caractérisé en ce que**
au moins un premier module onduleur et au moins un second module onduleur sont couplés par le biais d'un circuit intermédiaire de tension continue commun pour générer respectivement la composante système directe ou la composante système inverse à partir de la tension continue du circuit intermédiaire de tension continue commun, dans lequel le circuit intermédiaire de tension continue commun est alimenté par un courant généré par l'éolienne, dans lequel
au moins un de l'au moins un premier module onduleur et/ou de l'au moins un second module onduleur est préparé pour générer, au choix une composante système directe ou une partie de celle-ci ou une composante système inverse ou une partie de celle-ci, et dans lequel
une unité de commande centrale est prévue pour déterminer lequel des premier et second modules onduleurs est employé pour la génération d'une composante système directe et lequel est employé pour la génération d'une composante système inverse.

6. Dispositif selon la revendication 5, **caractérisé en ce que** l'unité de commande centrale est prévue pour spécifier des valeurs de consigne pour le module et la phase pour la génération respective de la composante système inverse ou de la composante système directe.

7. Dispositif selon la revendication 5 ou 6, **caractérisé en ce que**, pour la communication des modules onduleurs entre eux et, le cas échéant, pour la communication avec l'unité de commande centrale, un système de bus de données est prévu.

8. Dispositif selon l'une quelconque des revendications 5 à 7, **caractérisé en ce qu'**un procédé selon l'une quelconque des revendications 1 à 4 est employé.

9. Eolienne avec un dispositif selon l'une quelconque des revendications 5 à 8.
